# EUROPEAN PATENT APPLICATION

(11) **EP 3 462 389 A1**
(43) Date of publication of application: **03.04.2019**
(21) Application number: 17193477.1
(22) Date of filing: 27.09.2017
(51) Int. Cl.: G06Q 10/06, G06Q 10/04, G06Q 50/00, G06Q 50/30

(54) **PARKING SYSTEM THAT MEETS A SECOND OBJECTIVE AND METHOD THEREOF**

(71) Applicant: Deutsche Telekom AG, 53113 Bonn (DE)
(72) Inventor: HAIS, Petr, Praha západ (CZ); VRBA, Pavel, 734 01 Karviná (CZ); LAWRENSON, Matthew John, 1030 Bussigny (CH); NOLAN, Julian Charles, 1009 Pully (CH)
(74) Representative: Vossius & Partner Patentanwälte Rechtsanwälte mbB

(57) **Abstract**

A system for providing one or more travel routes according to one or more user objectives, the system comprising: a user objective determination algorithm to receive user information from a user interface and to determine one or more user objectives; a user objective database to store the one or more user objectives; an entity database to store a plurality of entity records; a parking database to store a plurality of parking locations records; a routing database to store a plurality of travel routes; a parking location recommendation algorithm to recommend one or more parking locations from the parking database according to the one or more user objectives; wherein the routing database comprises a routing algorithm for generating a plurality of travel routes to the one or more recommended parking locations.

## Description

The present invention relates to a parking system for providing one or more travel routes according to one or more user objectives and method thereof.

With an increasing number of cars, especially in urban areas, it is becoming more and more challenging to find a parking slot in the desired area, where the parking works on the "first comes first parks" basis. Drivers, who look for a parking place for their motor vehicle, have negative impact on the traffic flow and density, moreover combustion engines of cars, that go slow at the given place, pollute the local air, while the process of parking itself is stressful and unpleasant for many drivers, which increases the probability of damage to property and injury to persons involved in the traffic.

In general, the parking affects both the users of vehicles and the general population. When planning a journey, the location of a car park and time to park a vehicle can be important considerations. This is especially the case in populated areas where parking occupancy tends to be high.

Furthermore, parking of a vehicle is often chargeable, either by the owner of a parking location or by a government body, so the cost of parking may also be an important consideration for the vehicle's owner or user. Additionally, the user may wish to combine their vehicle journey with the use of public transport, so again the location of parking and time to park may well be important considerations.

A final consideration is that parking can be frustrating to the user, with most drivers agreeing that it is one of the least pleasurable parts of a journey.

Furthermore, since all vehicles cause pollution at some level, hence increased vehicle use whilst finding parking potentially contributes to the degradation of the environment. By having a clearer view of the parking situation at their destination, a vehicle driver can make choices that reduce the environmental impact of their journey.

Moreover, as with the previous example, if the user is able to conveniently combine a vehicle journey with the use of public transport then they have additional options to reduce their environmental impact.

The listed issue has been tried to be solved by the invention registered under US 2016/0140845 A1, which presents a method of predicting vacant parking slots using advanced databases operated in computer systems. The advanced databases have a detailed description of the given area including the geographical description, description of walking distance to the points of interest, etc., including the occupancy rate of the given area by parked motor vehicles based on the day time, day of the week, as well as information from parking buildings and parking lots. The database is continuously supplied with new data describing the current situation from the messages of active users, data sent from local authorities, e.g. from video cameras, data from the parking places' operators, etc.

Some disadvantages of the listed solution include, that after the input of the initial data into the database, the database depends solely on the updating data, such as active input from the invention's users, data from video cameras and local authorities' systems, data from parking lots' operators, etc., which bear the information on the occupancy rate of the given area with motor vehicles at a given time.

Another known solution mentioned in the invention, registered under US 2014/0266800 A1, tries to solve the problem by collecting data from the users' mobile end devices or users' motor vehicles equipped with the end devices, e.g. the collection of data including GPS coordinates. The system is able to monitor parking at the given area through the knowledge of characteristic features of the given area and data received from the users. The more technologically advanced the user's end device is, the more detailed data the invention obtains for a more accurate assessment of the parking places' occupancy rate. From the large amount of obtained data the system is able to determine not only the presence of the users, but also their behavior, which makes the monitoring more accurate, e.g. if a device generates data on the movement of a contributing user using accelerometers, gyroscopes or compass.

Disadvantages of the given solution are that the users have to actively contribute updating data into the system, while not every user is willing to give up a part of his/her daily data limit to contribute into the system. If the system would be attacked by a hacker, it is possible to actively track the given user, which is unacceptable from the privacy protection point of view. Finally, for the correct estimate of the probability of parking it is also important, that the number of active contributing users is as large as possible to enable a dense coverage and monitoring of the area.

Today, there are so called cellular (from the Latin "celula", a cell) radio telecommunication networks of mobile operators providing mobile telephone services. The telecommunication network radio signal coverage of a geographical area is divided into overlapping coverage cells, each cell is covered with radio signal from the so called base station, which is responsible for transmitting and receiving signal in the respective coverage cell. The radio signal propagation is influenced by the radio waves propagation environment, where radio waves behave differently in an open area and in an urban area, which affects the size and shape of the coverage cells. Apart from the radio waves propagation environment, the size of the coverage cells is also influenced by the density of end devices in the given area which are connected into the cellular telecommunication network. The higher the density of end devices in the area is, the more base stations there need to be, dividing the given area into a larger number of small coverage cells.

The aforementioned indicates that in urban areas, especially in cities, there is a very dense network of base stations for the mobile operator telecommunication network operation, which divides the geographical characteristics of the area into a detailed mosaic of sectors, where each sector belongs under one assigned dominant base station. Users' end devices connected to the telecommunication network, such as standard phones, smart phones, computers, tablets, etc., and additionally end devices falling into the Internet of things category, have to communicate with the telecommunication network through the dominant base station operating the given sector, where the end devices are currently positioned from the geographical perspective.

During its standard operation a telecommunication network produces so called signalling data, which bear information that the end device is connected into the telecommunication network through dominant base station, or they bear information that a certain operation with the end device has been realized, e.g. SMS receipt, telephone call, connection to the Internet, etc. Signalling data bearing information about connection of end device into the telecommunication network are obtained even if the end device is not in active use, because telecommunication networks check the connection of end devices on a periodical basis. Signalling data are anonymous from the end device's operation perspective, while end device is viewed for the sake of the network as a unique virtual entity connected to the communication network without any information enabling identification of the end device's owner or the subject of the end device's activity.

Even though mobile operators' telecommunication networks differ based on the used technology, e.g. telecommunication networks type 2G, 3G, 4G, 5G, etc., all technological solutions of telecommunication networks bear one common feature, it is always necessary to build radio coverage of a geographical area with base stations, and always when an end device connects to the network, signalling data are generated.

The following technologies terms are used in the present invention:
Natural Language Processing is a set of technologies that concern the understanding of language by a computer. The term encompasses many different techniques, including those whereby a sentence is broken down (or 'parsed') into its atomic units and then meaning is derived both from those units themselves and their arrangement within the sentence.

Parking advice apps are a class of smartphone app which provide information on the likelihood of finding parking near a target location at a particular time.

Smartphone data analysis can determine user's parking behavior, including when and where they park, when they leave a parking space and when they are returning to a parked vehicle.
Such data analysis might use data collected from sensors within the smartphone itself, such as GPS location data and inertial sensors.

Social media and online information can be used to predict the number of people at events and bars and thus the likely nearby parking need.

Predictive algorithms based on machine learning are able to integrate multiple sources of information to provide high quality estimates.

Machine Learning is a field of computer science that has evolved from pattern recognition and computational learning theory in computer science whereby historic data is used to 'train' an algorithm that then predicts the likelihood of a future based on a set of input data.

Such algorithms have been shown to be able to predict human behavior, and are forming an increasingly important part of modern life. In fact such algorithms have existed for some time, however their potential is now being realized, in part due to an increase in available computational power, and also by the availability of data, driven in turn in part by the increased use of digital devices such as smartphones.

Hence, it is an object of the present invention to provide a user with a way to combine the parking of their vehicle with the achievement of a personal objective.

It is another object of the present invention to allow a user to avoid certain locations yet still park their vehicle in a convenient place.

Still another object of the present invention is to provide a method for organizations to achieve marketing objectives, such as the viewing of an object, in a way that is unobtrusive to the user.

It is yet another object of the present invention to determine how best to calculate the current parking situation in order to predict the parking situation at a future time.

Another object of the present invention is to improve the chances of finding a parking space since the chances may dynamically change due to events occurring near a parking location, and information on these events may be found from online sites or from social media such as Facebook or twitter.

A further object of the present invention is to integrate informations and estimates which are able to inform the user of parking choices, the information may includes dynamic information on many user's parking choices may be available from an app providing parking information and which can track the parking needs, position and behavior of its users, but as these are only a subset of all drivers and parkers

Still another object of the present invention is to improve parking prediction by using location data of people away from their vehicles as an additional input source.

Another object of the present invention is to suggest alternative parking locations which includes non-obvious alternatives such as public transport or walking to a destination that may be better choices for parking, but these may not be obvious to a person needing a parking space.

Another object of the present invention is to establish a method of predicting the probability of occurrence of vacant parking slots in the given area and the system for enabling the method, which would use the signalling data of at least one telecommunication network, which would have a high prediction success rate as far as probability of occurrence of vacant parking slots, and which would surpass the limitations and disadvantages of the known inventions.

### SUMMARY OF THE INVENTION:

### (First embodiment)

Accordingly, the present invention is directed to a parking system for providing one or more travel routes according to one or more user objectives and method thereof that substantially obviates one or more of the above problems.

To achieve the above objects and according to a first embodiment of the present invention, there is provided a system for providing one or more travel routes according to one or more user objectives, the system comprising: a user objective determination algorithm to receive user information from a user interface and to determine one or more user objectives; a user objective database to store the one or more user objectives; an entity database to store a plurality of entity records; a parking database to store a plurality of parking locations records; a routing database to store a plurality of travel routes; a parking location recommendation algorithm to recommend one or more parking locations from the parking database according to the one or more user objectives; wherein the routing database comprises a routing algorithm for generating a plurality of travel routes to the one or more recommended parking locations.

Each entity record may comprise an entity name, an entity category and entity location information. The travel routes comprise a plurality of vehicle travel routes and a plurality of pedestrian walking paths obtained from one or more geographical navigation applications.

The user objective may comprise a destination and one or more desired entities and/or one or more undesired entities. The routing algorithm may be configured to generate additional travel routes to the one or more recommended parking locations that include the locations of the one or more desired entities and/or to avoid the locations of the one or more undesired entities.

A vehicle for use with the above system may comprise: a user interface to receive one or more user objectives and to display a route selection list that meets the one or more user objectives.

A method for providing one or more vehicle travel routes according to one or more user objectives, the method comprising: a user information collection process for receiving user information via a user interface and determining one or more user objectives, the user objectives comprise a destination and one or more desired entities and/or one or more undesired entities; a parking location recommendation process for recommending one or more parking locations from a parking database according to the one or more user objectives; generating, via a routing algorithm, a plurality of travel routes to the one or more recommended parking locations.

The method may comprise an entity collection process for gathering data on entities from online resources, entities owners, and/or users, and storing the entities as entity records in an entity database, wherein each record entity comprises an entity name, an entity category and entity location information.

The user information collection process may further comprise: parsing, via a user objective determination algorithm, the user information received from the user interface to determine the one or more user objectives.

The parking location recommendation process may further comprise the steps of: querying a routing database, via a parking location recommendation algorithm, to find the one or more parking locations in close proximity to the destination; querying the routing database, via the parking location recommendation algorithm, to find a plurality of travel routes from a current location to each parking location found; querying the routing database, via the parking location recommendation algorithm, for the locations of the one or more desired entities and/or one or more undesired entities; querying the routing database, via the parking location recommendation algorithm, for additional travel routes to include the locations of the one or more desired entities and/or to avoid the locations of the one or more undesired entities; compiling the travel routes into a route selection list; presenting, via the user interface, the route selection list to the user.

The method may further comprise: obtaining a plurality of vehicle travel routes and a plurality of pedestrian walking paths from one or more geographical navigation applications, and storing the plurality of vehicle travel routes and the plurality of pedestrian walking paths as travel routes in the routing database.

The method may further comprise generating, via a routing algorithm, the additional travel routes to the destination which include the locations of the one or more desired entities and/or to avoid the locations of the one or more undesired entities.

The method may further comprise storing the one or more user objectives in a user objective database. The method may further comprise storing a plurality of parking locations records in a parking database.

Various entities may be identified and their locations stored in a database. Examples of entities include objects - such as a certain type of car, certain types of shops - such as Greek food delicatessens, certain buildings etc. A user may be monitored and various objectives are learnt. Examples of objectives include the wish to view a certain object (i.e. being co-located with the entity), the wish to avoid certain types of shops/restaurants etc. (i.e. not being located with the entity). When the user enters a desired final location to the system a route is determined that provides a parking location that meets the primary goal of being convenient to reach the desired location and also allowing the achievement of the secondary objective being co-located or not being co-located with a certain entity or type of entity. The route that is provided by the system includes instructions as to how to reach the parking location, and may also include instructions as to how to reach the final location, for example by providing a 'walking route' to be followed after the user's vehicle has been parked.

According to the above-described systems, and/or methods, the present invention has the advantageous effect of allowing a user to better manage their personal activities, for example it allows the user to better meet some personal quantification goal, such as a diet objective. Additionally, it allows the user to meet other personal goals such as viewing certain objects, viewing a certain location etc.

### (Second embodiment)

To achieve the above objects and according to a second embodiment of the present invention, there is provided a system to analyse and predict availability of one or more parking spaces at one or more parking locations, the system comprising: a receiver unit to receive a desired destination and/or a parking location from a user parking situation unit; a parking probability assessment unit to assess an actual parking situation at the desired destination and/or parking location by periodically or continuously examining information from one or more information sources on the parking situation in the desired destination and/or parking location; a parking probability prediction unit to periodically or continuously retrieve data from an information database, the parking probability prediction unit being further configured to compute a probability of parking availability at the desired destination and/or the parking location based on the data from the information database and the parking situation assessed by the parking probability assessment unit.

The system may further comprise an alternative suggestion unit to generate and suggest one or more alternative parking locations based on the probability computed by the parking probability prediction unit and the data assessed by the parking probability assessment unit.

The user parking situation unit may be configured to provide to the receiver unit an estimation on a time of arrival at the desired destination and/or the parking location.

The information database may include data on historical traffic movement and traffic flow analysis. The one or more information sources may include social media websites and traffic news feed.

The parking probability assessment unit may be configured to determine if the parking situation at the parking location is worsening or improving based on the parking availability at the parking location.

The parking probability assessment unit may comprise an event information collection processing means to collect information from a plurality of social media sources and/or a database; a parking information acquisition means to process information and determine usage of parking spaces at the parking location; and a parking change prediction algorithm to retrieve data from the event information collection processing means and the parking information acquisition means to predict a change in the parking situation at the parking location.

The alternative suggestion unit may further comprise an alternative parking location generation means to generate routes to one or more alternative parking locations near the desired destination; and an alternative parking location assessment means to determine a probability of parking at the one or more alternative parking locations by using the parking probability prediction unit and the parking probability assessment unit.

The alternative suggestion unit may further comprise a travel planning means to retrieve data from a transportation network database and wherein the data from the transportation network database includes public transportation travel times and routes from the alternative parking location to the desired destination.

The alternative parking location generation means may be further configured to use the data from the transportation network to generate one or more alternative travel routes to the desired destination that include a combination of an alternative parking location and one or more alternative transportation modes such as public transportation and/or short distance walks to the desired destination.

A vehicle for use with a above system, the vehicle may comprise a user interface with a user parking situation unit to receive one or more inputs from a user and to display information received from the system.

A method for analysing and predicting availability of one or more parking spaces at one or more parking locations, the method may comprise: inputting, via a user parking situation unit, a desired destination and/or a desired parking location by a user; assessing, via a parking probability assessment unit, an actual parking situation at the desired destination and/or the parking location by periodically or continuously examining information from one or more information sources on the parking situation in the parking location; retrieving periodically or continuously, via a parking probability prediction unit, data from an information database; computing, via the parking probability prediction unit, a probability of parking availability at the desired destination and/or the parking location based on the data from the information database and the parking situation assessed by the parking probability assessment unit.

The method may further comprise evaluating if the probability of parking availability is below a pre-defined threshold, if so, providing, via an alternative suggestion unit, one or more alternative parking locations to the user based on the probability computed by the parking probability prediction unit and the data assessed by the parking probability assessment unit.

The method may further comprise generating, via an alternative parking location generation means, routes to one or more alternative parking locations near the desired destination.

The method may further comprise generating, via the alternative parking location generation means, routes that include one or more alternative transportation modes such as public transportation or short distance walks from the alternative parking location to the desired destination.

The method may further comprise determining, via a parking probability assessment unit, if the parking situation at the parking location is worsening or improving based on the parking availability at the parking location.

The method may further comprise determining, via an alternative parking location assessment means, a probability of parking at the one or more alternative parking locations by using the parking probability prediction unit and the parking probability assessment unit.

The assessing of the parking situation in the parking location may include assessing a change in the parking situation based on information from an event information collection processing means and a parking information acquisition process means.

The method may further comprise collecting, via the event information collection processing means, information from a plurality of social media sources and/or a database; and processing information and determining usage of parking spaces at the parking location, via the parking information acquisition means.

The system may further: determine the desire for parking of a user in an area (the "Location") and the time when they are estimated to park (the "ETA"); use traffic flow (from mobile device sensors), databases of parking spaces and their average availability and any other currently used information to predict the parking demand at the Location; continuously gather data from (i) social media, public listings etc. to assess the time and nature (including parking demand) of events that can impact people's parking chances, and (ii) data from user's smartphones that predicts when they are likely to park or be heading back to their vehicles - then use an AI machine learning predictive algorithm to assess the likelihood of other people parking in a location or people returning to their vehicles and vacating parking spaces, and use this to update the parking availability predictions; determine current alternatives to parking at the Location or parking at alternative locations and walking, taking a park and ride bus etc., and provide user information of parking at that alternative location and method of travelling to the desired location; and present the options to the user with information such as parking availability, time/cost etc. to allow them to make an informed selection as to how to complete their journey (park at original location or park at an alternative location).

According to the above-described systems, and/or methods, the present invention has the advantageous effect of using a purality of dynamic data sources to continuously update predictions of parking availability, including determining both scheduled events and ad-hoc events, plus the dynamic behaviour of parking app users. Additionally, the present invention is able to provide informed parking alternative choices to users on a dynamic basis.

### (Third embodiment)

In a third embodiment of the present invention, to predict the probability of occurrence of vacant parking slots in the given area to shorten the time of looking for the place to park a motor vehicle, at first, a request for making the prediction of probability in the given area must be received. Consequently the prediction of probability of occurrence of vacant parking slots in the given area will be made, comparing the official number of parking slots in the given locality with the current number of persons and motor vehicles present in the given area. Then the result of the prediction gets published.

The subject matter of this third embodiment of the present invention is to use signalling data for making the prediction from at least one cellular telecommunication radio network as a source of information on persons and motor vehicles in the given area.

Using signalling data is practical due to the fact that the signalling data are generated permanently for all end devices connected to the telecommunication network with no need for interaction from the users themselves. Information contained in signalling data comprise a very complex set of data provided by every end device located in the given area. Due to the fact that the cellular telecommunication network divides the geographical area into a mosaic of sectors, it is possible to sort out the signalling data according to the respective localities. The invention surpasses shortfalls of current technology by not requiring the necessity for active participation by the users, as well as it does not require installation of any supplementary sources of updating data, such as cameras, boom gates, sensors, etc.

The signalling data are used from the connection between the cellular telecommunication network base stations and the end devices connected to the telecommunication network, the individual connected end devices are viewed as virtual entities, while at the same time the behavior of the virtual entities is analyzed from the signalling data. The base stations serve individual sectors dividing the geographical area into a mosaic where the end devices are located. The signalling data analysis enable the determination of the virtual entities' behavior, while it is possible to find out from the signalling data whether an entity has been moving over the geographical area or has stayed in place, and if it has moved, what pattern movement has followed. It is also practical that signalling data from various generations of telecommunication networks may be used, although they differ in the mosaic of sectors covered by radio signal, the intersection of the two signalling data sets improves the accuracy in the determination and tracking of the virtual entities' behavior.

Before the prediction of probability is made, the virtual entities will be categorized, and then still prior to the prediction the virtual entities not affecting the probability of occurrence of vacant parking slots in the given area will be filtered out from the signalling data too. It is obvious that by filtering entities out with behavior not affecting the occupancy rate of the parking slots in the given area the volume of processed data will decrease and the prediction calculation will become easier and more accurate.

While executing the prediction of probability at least one assumption of the current actual occupancy rate of parking slots in the given area will be used for making the prediction more accurate, which is based on the statistical processing of the archived signalling data set. This is practical due to the fact that the official number of parking slots in the real world is lower due to the parked vehicles. The number of parked vehicles changes during the day, while this change in the number of parking slots may be anticipated from the behavior of the virtual entities during the day or other period of time, and statistically assessed from the archived signalling data. While preparing the assumption of the current actual occupancy rate of parking slots in the given area and if the amount of the archived signalling data is insufficient, experimentally obtained information on the actual state of the occupancy rate of parking slots in the area will be used for bridging the period of time needed for acquiring a sufficient set of archived signalling data. The experimentally obtained data, acquired by observation of the given area for individual periods of time, bear information on the actual occupancy rate of parking slots, which is assigned to the virtual entities' behavior, which is archived on a regular basis.

In case the assumptions of the current actual occupancy rate of parking slots in the given area get devalued due to the change in the official number of parking slots in the given area, experimentally obtained data on the actual state of the occupancy rate of parking slots in the area will be used for bridging the period of time required for acquiring the sufficient set of archived signalling data. The change in the official number of parking slots results in the distortion of the prediction result when the assumptions bound to the original official number of parking slots are used, therefore it is practical to use the experimentally obtained data for making initial assumptions, before a sufficient amount of archived signalling data is obtained.

While executing the prediction of probability for the given area, feedback information related to the results of previous predictions of probability in the given area from motor vehicle drivers will be utilized to make the prediction more accurate. In case a motor vehicle driver is not successful in finding vacant parking slots, e.g. due to the fact that in the given locality at the given time municipal waste is being collected and the parking slots which are normally vacant are filled with waste containers, the driver submits his/her feedback so that the invention will take this fact into account while making next prediction.

When making the prediction of probability, supplementary data on the current situation affecting the behavior of persons and motor vehicles will be used for making the prediction more accurate. Supplementary information relates to at least one feature from the group comprising the weather, road restrictions, national holiday, summer vacations, vacation from work. Supplementary information may consider e.g. the weather forecast, while it can be assumed, that rain may cause more people to come in the given location by car, or if a street with a significant number of parking slots is closed, the cars will move into neighboring streets, etc.

The supplementary data comprises information on cultural events, social events and sport events. Certain kind of events may cause temporary restrictions in traffic or a high concentration of motor vehicles, which will in the short-term perspective, for the duration of the event, rapidly decrease the probability of occurrence of vacant parking slots.

The system uses information on an object of interest from the given area for predicting the probability, whereupon the resulting predicted information on the object of interest will be published together with the result of the prediction. The advantages of linking information on the object of interest include that not only the information on possible parking is offered, but also information on something the driver might be interested in, e.g. if the driver likes music, he/she is given information that at the given time he may want to park close to a music store, if the driver wants to.

The invention may also includes a system for the prediction of probability of occurrence of vacant parking slots in the given area to make the time period of looking for a place to park motor vehicles as short as possible.

The system for performing the method may comprise at least one server connected to the Internet, which is equipped with at least one data storage device with at least one database and at least one software module. Furthermore, the system may include at least one user device connected to the Internet for the communication between the user device and server.

The subject matter of an invention may comprise at least one signalling data database stored on a data storage device for the reception and archiving of signalling data from the cellular radio telecommunication network. Furthermore, on the data storage device there is also stored at least one map background database comprising the geographical description of the given area, from which the respective localities are selected, to include the official number of parking slots in the given localities. Finally, the data storage device comprises at least one prediction software module for an automatic execution of the prediction of probability of occurrence of vacant parking slots in the given area from signalling data. The system's advantage is its simplicity, it does not require any additional hardware located in the streets such as cameras, sensors, boom gates, etc. The system's basic version does not require active updating data input by the users.

There is stored in the data storage device the virtual entities categories database and at the same time the prediction software module comprising algorithm for the identification of the virtual entities' behavior from signalling data. Signalling data comprises information on all entities, while a large number of virtual entities does not affect the occurrence of vacant parking slots, e.g. children at schools, working people, etc. It is therefore practical to categorize the virtual entities to enable the system to work only with some categories of the virtual entities.

There is stored in the data storage device the statistics software module for making assumptions from the current actual occupancy rate of parking slots in the given area from the archived signalling data, and also the long-term statistic states database for storing the assumptions from the statistics software module. Due to the fact that the official number of parking slots is different from the actual occupancy rate, it is practical to include in the prediction calculation an assumption of how many vacant parking slots there actually are in the given area.

In the data storage there is a training database with experimentally obtained data on the actual state of the parking slots occupancy rate at the given area. The system does not have sufficient data to make assumptions for new localities, it is therefore practical to use the training database in the system, which will replace the missing signalling data for the sake of statistical assumptions at the beginning. Using the training database brings advantages in situations where the official number of parking slots changes and the existing prediction causes errors in the system calculations.

The user device is equipped with at least one data storage device with the feedback software module for sending the data from users to the long-term statistic states database. The user's device is also equipped with an application enabling sending the user's prediction evaluation in the given area. When some areas report frequent dissatisfaction, it is practical to make a field research, or try to identify the fault straight from the users' feedback information.

There is at least one supplementary database stored in the data storage device comprising data on weather, road closures, data on national holidays and important days, data on sport events, cultural events, data on social events, etc. Parking of motor vehicles is based on the behavior of people, e.g. if the weather is nice, fewer parking slots are needed, if there is a national holiday or an important day, there is also a significant change in the required number of parking slots. The same applies if there are any events in the area, with a larger number of people coming by car, or if the event takes place in an area with parking places, which they made unavailable. The advantageous version of the system may be equipped with at least one social software module for the collection of data from social networks, which collects data on scheduled events and prepares it for the use by the system when calculating the prediction.

In the data storage device there is stored the users' points of interest database allowing to add the information on the user's point of interest in the given area to the result of prediction of probability in the given area. It is practical, that if a user requests a prediction in the area where his/her object of interest is located, the system offers him/her not only the result of the prediction, but also notifies him/her not to miss the object of interest.

The prediction software module may comprise a computer program for an automatic execution of the following sequential steps: determining the given area from the received request for prediction; finding the given area in the map background database, to include the identification of the official number of parking slots in the given area; finding current signalling data in the signalling data database; identification and monitoring of the virtual entities' behavior from the signalling data; filtering virtual entities not affecting the occupancy rate of parking slots out; using assumption of the current actual occupancy rate of parking slots in the given area; reviewing the actual behavior of entities in the given area with the assumption of the current actual occupancy rate of parking slots in the given area; determining the probability of occurrence of vacant parking slots in the given area; and publishing the results of prediction of probability.

The system may comprise a statistics software module containing a computer program for an automatic execution of the following sequential steps: determining the given area and uploading information on the official number of parking slots; separating of day time into separate time periods; uploading all archived signalling data from the given area into the signalling data database and/or data from the training database with experimentally obtained data on the
actual occupancy rate of parking slots in the given area; statistic assessment of the virtual entities' behavior in the given area for each individual period of day time; making an assumption for the given area and for each individual period of day time; and saving the assumptions in the long-term statistics states database.

The system may comprise a social software module comprising a computer program for an automatic execution of the following sequential steps: connecting to at least one social network; collecting of data on social events, sport events, cultural events; sorting the collected data based on the given area and times of the events out; and saving the data in the supplementary data database.

One of the greatest advantages of the new invention is the use of signalling data from the cellular telecommunication networks of mobile operators, which replaces the necessity for the use of additional hardware installed in the streets and the necessity for the provision of updating data from the actual users in the existing solutions. The system uses the correlation between the virtual entities' behavior and the occupancy rate of parking slots for calculating the results, while all information on the virtual entities' behavior are contained in the signalling data. Some other advantages of the invention include that the invention is able to make the prediction results more accurate based on the statistic assessment of archived data, further on the invention enables the reception of users' feedback and adding supplementary data into the prediction calculation, while the supplementary data includes information on weather, national holidays, street closures, etc. It is also practical, that the invention is able to extract information on current events from social networks, such as cultural events, social events, sport events, and adjust the prediction results based on information on these events. Furthermore, it is practical, that the invention may add information on an object of interest, the motor vehicle driver can visit after parking while sending predictions. Adding information on an object of interest has a large commercial potential, which gives the invention additional value.

### BRIEF DESCRIPTION OF THE DRAWINGS:

The aforementioned invention will be specified in the following drawings, where:
FIG. 1 illustrates a parking system according to a first embodiment of the present invention,
FIG. 2a is a flow chart showing the user information collection process according to the first embodiment of the present invention, and
FIG. 2b is a flow chart showing the parking location recommendation process according to the first embodiment of the present invention

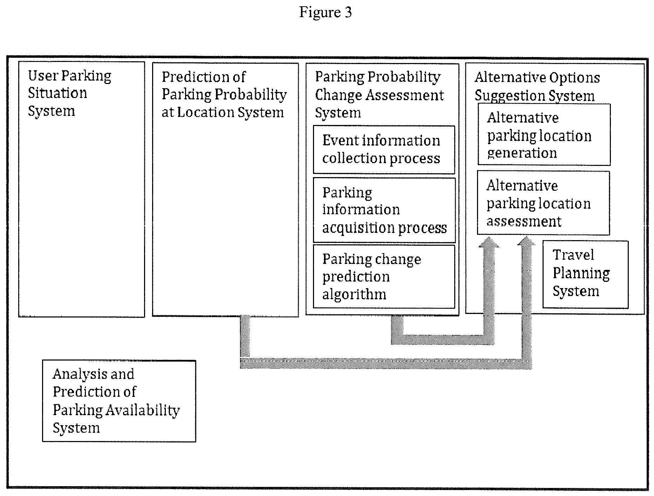

FIG. 3 shows a diagram of the system to analyse and predict availability of one or more parking spaces at one or more parking locations according to a second embodiment of the present invention

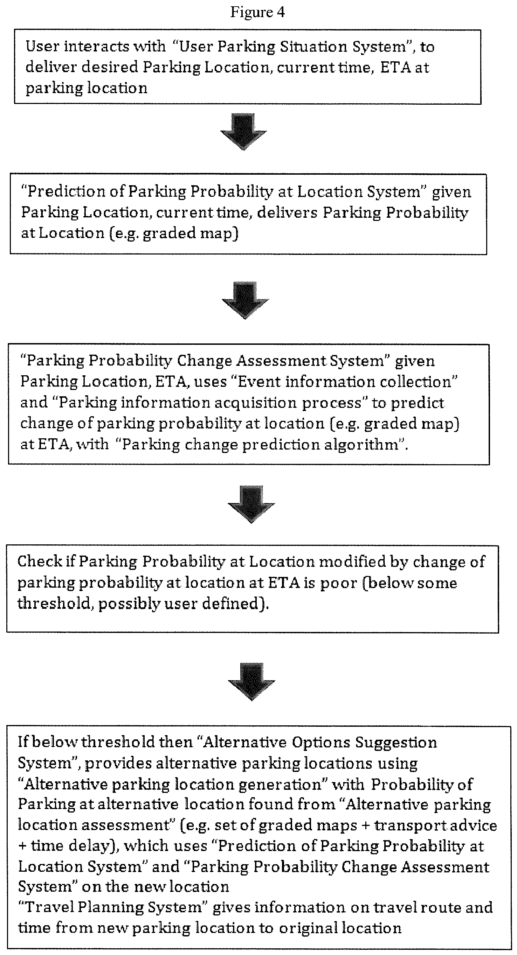

FIG. 4 is a flow chart showing a method for analysing and predicting availability of one or more parking spaces at one or more parking locations according to the second embodiment of the present invention

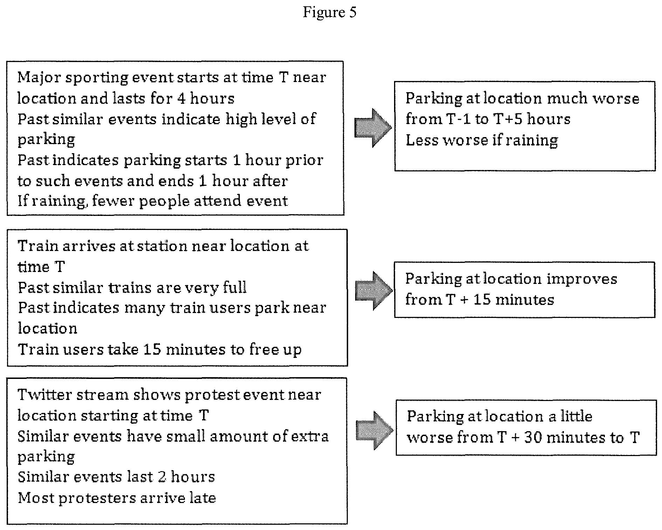

FIG. 5 shows examples of events indicating parking situation at location according to the second embodiment of the present invention

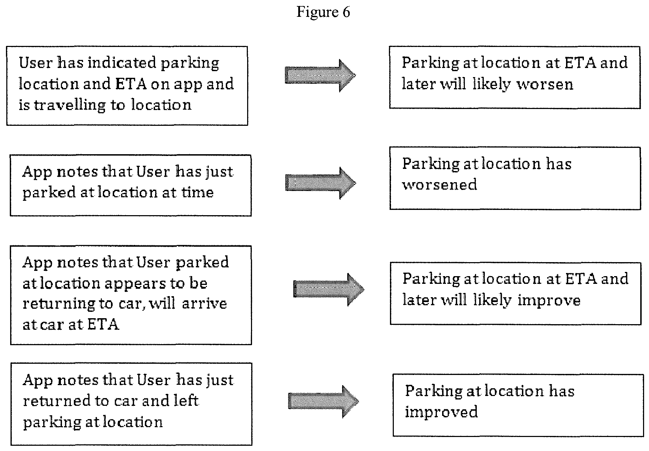

FIG. 6 shows the parking change information from app users according to the second embodiment of the present invention
FIG. 7 shows a diagram of the system for the prediction of probability according to the third embodiment of the present invention,
FIG. 8 shows the change in number of virtual entities during the day in the area, which belongs into the residential area category according to the third embodiment of the present invention,
FIG. 9 shows the change in number of virtual entities during the day in the area, which belongs into the business area category according to the third embodiment of the present invention,
FIG. 10 shows the correlation between the number of entities present in the residential area and the number of actually available parking slots according to the third embodiment of the present invention.

### DETAILED DESCRIPTION

In the following description, the terminologies described below are defined in consideration of functions in the present invention. However, the elements of the present invention should not be limited by the terminologies used in the specification of the present invention. That is, such terminologies will be used only to differentiate one element from other elements of the present invention.

### (First embodiment)

The term "Vehicle Driver/User" is also described as the 'User'. The term "Parking Location" refers to a geographical zone containing parking spaces. Examples of Parking Locations include streets that contain space where drivers can legally park, a car park or an area of ground where parking takes place. A Parking Location typically contains a plurality of Parking Spaces.

The term "A Parking Space" refers to the individual spaces within a Parking Location where a vehicle can be parked.

The term "Parking Situation" refers to data relating to the estimated parking occupancy at a given Parking Location.

The term "User Information" refers to information that has been gathered from the user, for example by recording the user's voice during conversation, or from typed-text as the user interacts with Social Networks etc.

The term "User Objective" represents the user's desire to either be located with something, or not be located with something. This may be stated in a more general sense, for example that the user wishes to see something, or it may be determined that the user has an interest in something - but the final statement determines whether a user wishes to be co-located with something or wishes not to be co-located with something.

The term "Entity" is defined as an object, shop, location etc. - in effect anything that can be identified and with which the user could be co-located with.

The term "Social Network" refers to any online resource where users interact by entering text. Examples include well known Social Networks such as Facebook, Twitter etc. but also in the context of this invention other services such as email, chat forums etc. could be considered as Social Networks.

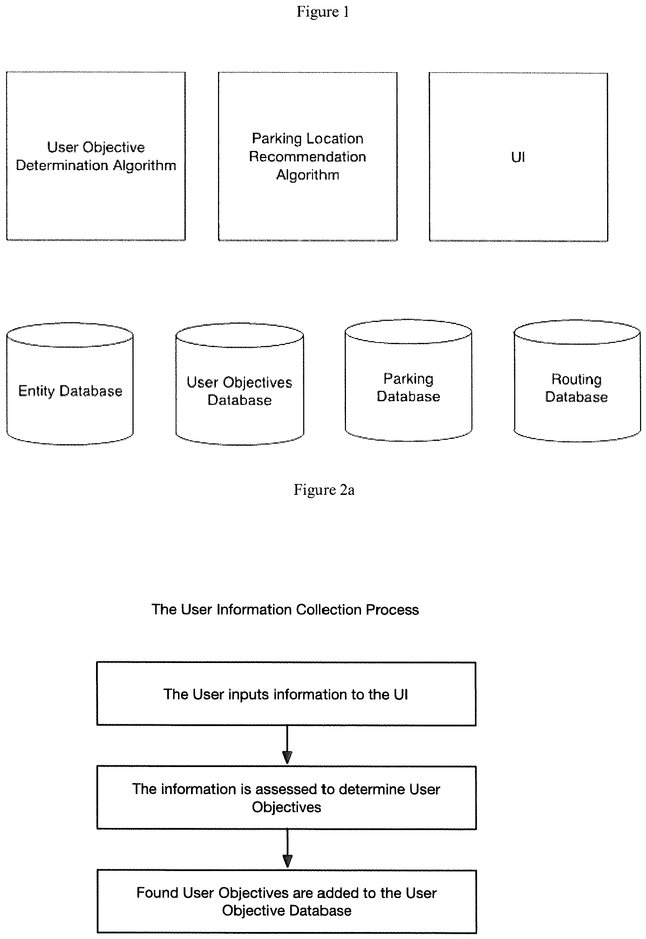

A schematic of an example System is shown in Figure 1. A user interface (the "UI") that enables: a. User Information to be inputted to the System by the user, this may be in the form of: i. Voice, for example (i) where the user gives the System information directly, or (ii) where the System monitors the user's general conversation and extracts relevant information, ii. Text, for example (i) where the user gives the System information directly, or (ii) where the System monitors the user's general 'typing' activity, for example whilst interacting with a Social Network, and extracts relevant information. Depending on embodiment the UI may include: i. A microphone for detecting spoken words. ii. Some form of 'touch' interface such as a keyboard or touchscreen. b. Information to be presented to the user, for example a description of a route. c. For practical systems, the 'UI' may in fact be comprised of multiple UIs spread over multiple devices. 2. An algorithm (the "User Objective Determination Algorithm"), being an algorithm that takes User Information and either extracts or derives a User Objective. 3. A database (the "Entity Database") that stores a record of various Entities and their locations. Some Entities may be static (e.g. shops) whilst other Entities may be dynamic (e.g. vehicles). Where an Entity is dynamic either the location of the Entity is continually tracked or a time limit is placed on the information, where the data is only used within the limit. 4. A database (the "User Objectives Database") that stores a record of User Objectives collected via the UI. 5. A database (the "Parking Database") that stores a record of Parking Locations, and depending on embodiment the current Parking Situation at those Parking Locations. 6. A database (the "Routing Database") that stores a set of routes between various locations. These routes include both driving routes and walking routes. In some embodiments the Routing Database may be in the form of map data and an algorithm that can dynamically generate a route (as in common gps-based geographical navigation applications such as TomTom, Google Maps, Waze etc.). 7. An Algorithm (the "Parking Location Recommendation Algorithm") that recommends a Parking Location to the user.

The Method may be divided into three main processes: 1. The User Information Collection Process (prior to parking). 2. The Entity Collection Process (prior to parking). 3. The Parking Location Recommendation Process (at 'use-time'). The User Information Collection Process (prior to parking): A schematic of an example User Information Collection Process is shown in Figure 2a. 1. The user inputs User Information via the UI. 2. The User Objective Determination Algorithm takes the User Information as an input and determines any Objectives the user may have stated. The method to achieve this may take various forms, but an example is as follows: a. The input from the user is organized as text sentences - this might be directly from the UI if the user has typed the input, or may require a text-to-speech conversion if the user has spoken the sentences. b. The sentence is 'parsed' into its constituent elements, for example using an algorithm such as the Stanford NLP Parser. For example, using this parser the phrase "I want to see a BMW X3" is parsed to be: I/PRP want/VBP to/TO see/VB a/DT BMW/NNP X3/NNP; c. Where: (note examples are taken from ): PRP = a pronoun, personal, for example hers, herself, him, himself, hisself, it, itself, me, myself, one, oneself, ours, ourselves, own self, self, she, thee, theirs, them, themselves, they, thou, thy, us. VBP = a verb, present tense, not 3rd person singular, for example predominate, wrap, resort, sue, twist, spill, cure, lengthen, brush, terminate, appear, tend, stray, glisten, obtain, comprise, detest, tease, attract emphasize, mold, postpone, sever, return, wag. TO = to" as preposition or infinitive marker. VB = verb, base form, for example, ask, assemble, assess, assign, assume, atone, attention, avoid, bake, balkanize, bank, begin, behold, believe, bend, benefit, bevel, beware, bless, boil, bomb, boost, brace, break, bring, broil, brush, build. DT = determiner, for example all, an, another, any, both, each, either, every, half, many, much, nary, neither, no, some, such, that, the, them, these, this, those. NNP = a noun, proper, singular, for example Motown, Venneboerger, Czestochwa, Ranzer, Conchita, Trumplane, Christos, Oceanside, Escobar, Kreisler, Sawyer, Cougar, Yvette Ervin, ODI, Darryl, CTCA, Shannon A.K.C., Meltex, Liverpool. Other units of particular interest include: NN = Noun, singular or mass, for example common-carrier, cabbage, knuckle-duster, Casino, afghan, shed, thermostat, investment slide, humour, falloff, slick wind, hyena. NNS = Noun, plural, for example undergraduates, scotches, bric-a-brac, products, bodyguards, facets, coasts, divestitures, storehouses, designs, clubs, fragrances, averages, subjectivists, apprehensions, muses, factory-jobs. NNPS = Proper noun, plural, for example Americans, Americas, Amharas, Amityvilles, Amusements, Anarcho-Syndicalists, Andalusians, Andes, Andruses, Angels, Animals, Anthony, Antilles, Antiques, Apache, Apaches, Apocrypha. d. From this various patterns can be extracted, for example: i.NNP, NN, NNS and NNPS may be set as Entities; ii. A set of verbs could be used that means the user may wish to view an Entity, for example: 'want to see', 'thinking of buying', 'haven't seen a' etc. iii. Also, a different set could be established indicating the user does not wish to view an Entity, for example 'don't want to see', 'cannot stand' etc. e.Also, some basic rules may be manually added, for example if the user indicates they are on a diet then a rule could be used to associate the word 'diet' with entities associated with food. f. Hence a basic form of User wants/does not want to be co-located with Entity X can be generated. These can be considered User Objectives. 3. When a User Objective is found, it is added to the User Objective Database.

The Entity Collection Process (prior to parking): 1. The Entity Database is populated. This can be achieved through various means, for example: a. The owners or operators of Entities can manually add them to the database, for example shop owners may wish to add the details of their business to the database. b. The information may be 'scraped ' from Social Networks or other online resources such as online maps, for example using the techniques based on the Stanford NLP Parser described above. c. Data may be gathered from other users of the service, for example if users provide information about their vehicles then these vehicles may be logged as Entities.

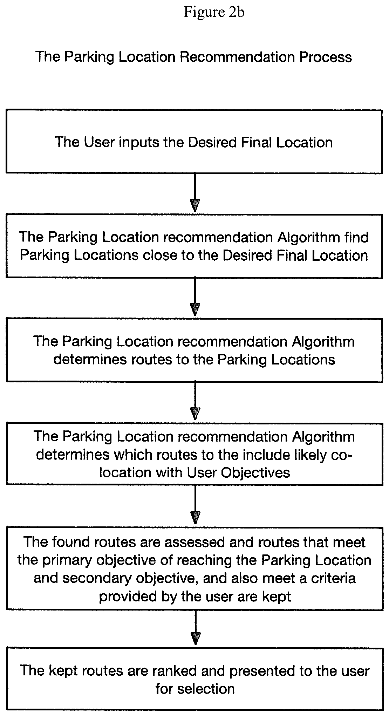

The Parking Location Recommendation Process (at 'use-time'): A schematic of an example Parking Location Recommendation Process is shown in Figure 2b. 1. The user inputs a location (defined as the "Desired Final Location"). 2. The Parking Location Recommendation Algorithm then takes the Desired Final Location as an input together with any User Objectives stored in the User Objective Database. 3. The Parking Location Recommendation Algorithm queries the Routing Database to find routes that meet both the need to travel to the Desired Final Location and any User Objectives. An example of how this might be achieved is as follows: a. The user gives a value indicating a threshold the "User Tolerance Threshold"), such as the additional length of route (either in time or distance) they will tolerate to include a wanted Entity or to ensure an unwanted Entity is not on the selected route. b. The Parking Location Recommendation Algorithm queries the Routing Database to find the set of Parking Locations closest to the Desired Final Location. c. The Parking Location Recommendation Algorithm queries the Routing Database to find the routes from the user's current location to each of the found Parking Locations. The distance of each of these routes is also determined, d. The Parking Location Recommendation Algorithm queries the Routing Database to find the location of wanted/unwanted Entities. e. The Parking Location Recommendation Algorithm queries the Routing Database to find either i. Additional routes that include the ability to be co-located with wanted Entities. ii. Which of the initial routes contain the likelihood of being co-located with unwanted Entities. These are compiled into a list (the "Route Selection List"), f. The Parking Location Recommendation Algorithm then presents the Route Selection List, i.e. routes that meets both the need to reach the Desired Final Destination and the User Objective to the user, and routes that are within the User Tolerance Threshold, where the list is ranked using some parameter, for example distance. g. In some embodiments the routes may include a section after the vehicle has been parked where the user walks to the Desired Final Location.

Additional Embodiments of the present invention may include: The user's historic actions may be tracked and added to a database used by the User Objective Determination Algorithm. For example, if a user frequently visits certain cafés (known to the System as cafés are stored as Entities), then this can be stored as a 'User Tendency'. Hence if the user states an Objective of wanting to drink less coffee then the System can note that an additional User Objective is to avoid the cafés in question. Such an embodiment requires additional apparatus to track the user's behaviour, for example, in the example above the user's location may be tracked to determine they frequent the cafés in question. The concept of mining text to find User Objectives could be extended to mining image data. For example, new image processing algorithms are available that can identify objects within an image. If for example a user posts images that include a certain type of car, for example a Ferrari, then it may be assumed they are a fan of such cars, and hence would like to see 'live' examples. Examples of projects that are able to identify objects within images are available from Google and Microsoft. In some embodiments the choice of Parking Location may also be influenced by the current Parking Situation.

### (Second embodiment)

An "Analysis and Prediction of Parking Availability System" comprising: 1. "User Parking Situation System" that determines parking behaviour of the user, i.e. they are driving to location and require parking, e.g. from user indicating on the parking smart app a destination and desire for parking. 2. "Prediction of Parking Probability at Location System". Using standard methods this gives to the user an ability to assess the likelihood of parking availability near a Location - e.g. show to user on smartphone the probability of parking availability near a location with a colour coded map. Data derived from multiple sources including historical, traffic movement analysis etc. 3. "Parking Probability Change Assessment System" that examines multiple online sources, information from users as well as past statistical parking data (e.g. % cars to people at particular types of events, % use on street parking etc.), to determine if a parking situation in a location is likely to improve or worsen between current time and the probable time of actual parking at location and by how much.

The Parking Probability Change Assessment System uses: a. "Event information collection process" - Uses online information and social media information on events/location from the internet, social media, twitter streams etc. - event information, information on ad-hoc events, estimates on attendance at bars, cinema times, transport times (when trains leave and arrive) and so on. Examples of data that might be collected from social media include: i. Mentions of events, times and locations. ii. Online 'invitations' and 'responses', iii. Online discussions of perturbations, for example traffic perturbations due to events. Note that when social media is used to collect data, then in some embodiments further inferences can be drawn from the people posting the information. For example, if people mention a certain event then by assessing their profiles, and potentially other posts, then the person could be placed in a demographic group, and then the typical forms of transport for that group can also be taken into consideration. For example, a first group may be more likely to drive to an event, whilst a second group may have a higher propensity to take public transport, thus having less of an effect on the parking situation close to the event. Note: databases other than social media may also be considered - for example databases containing weather/pollution data, and also predictions of such data - whereby the user's perception of a particular condition (e.g. high pollution in a city center) may lead the user to prefer to park in another area (e.g. the outskirts of the city). b. "Parking information acquisition process", uses information from (other) users to determine that they are either filling the parking in the location or likely to be freeing up the parking in the location around the ETA, and that therefore it is likely that other (non-users) may be doing so as well. To note filling parking in the location: i. They are using the app to travel to the location indicating they are likely to park there (at their ETAs). ii. They have just arrived and parked in the location. Alternatively, it can determine they are likely to free up parking in the location: iii. They have parked in the location. iv. They are travelling back in the direction of their car. In some embodiments an individual's history may be taken into consideration, for example a particular person might have a certain 'routine' that involves taking the same route back to their vehicle. Thus when this route is detected the likelihood the person is walking back to their vehicle is higher, v. They will arrive at their car at approximately the ETA or just before. c. "Parking change prediction algorithm", which uses Machine Learning, trained on past data, taking the data from the "Event information collection process" and the "Parking information acquisition process" (plus other data sources such as weather, location type, time of day) to predict changes (better or worse) to the parking situation at location around the ETA.
4. "Alternative Options Suggestion System" for obtaining and suggesting alternative parking locations that might meets the needs of the user and gives their locations, parking maps and travel routes/times to desired location. The Alternative Options Suggestion Systems uses: a. "Alternative parking location generation", generates the other possible parking locations with an ability to get to desired location, e.g. using public transportation or short walks b. "Alternative parking location assessment", to determine probability of parking at these alternative locations which in turn uses: i. "Prediction of Parking Probability at Location System" ii. "Parking Probability Change Assessment System" c. "Travel Planning System" uses transportation planning data to get travel times and routes from new parking location to user's desired location. Note: the Alternative Options Suggestion System might also include an estimate of the cost of fuel required to execute the various choices.
1. The "Analysis and Prediction of Parking Availability system" uses method: a. If known to be driving to location and require parking, determined from "User Parking Situation System", delivers Parking Location, current time, ETA, then: i. Assess probability of parking availability, by "Prediction of Parking Probability at Location System" given Parking Location, current time, delivers Parking Probability at Location (e.g. graded map) ii. Assess if parking will improve or worsen at time of arrival with "Parking Probability Change Assessment System" given Parking Location, ETA, delivers change of parking probability at location (e.g. graded map) iii. If parking probability near location at estimated time of arrival (Parking Probability at Location plus change of parking probability at location) is poor (below some threshold, possibly user defined), offers alternatives from "Alternative Options Suggestion System", delivers Probability of Parking at Alternative Locations (e.g. set of graded maps + transport advice + time delay).

An example of a use case for the third embodiment would be where multiple events could result in the worse parking chance and thus other locations are suggested:
Alan wants to go to an event and park at a location nearby to arrive at time ETA. He enters this information on his smartphone app and the app shows a driving route and colour coded information on the probability of getting a parking space in the area around the location. Despite the parking being predicted to be poor, he decides to drive to the event.

Whilst en route the app continually runs the "Analysis and Prediction of Parking Availability system". This initially determines that many people also are likely to attend the same event and park at the location around Alan's ETA. However, it then also determines that another nearby event has ended and that many people have parked in the same location for that event and will leave the location prior to Alan's ETA. It also determines that some users of the app (who have their parking location and current position noted) are returning to their cars parked in the location and this is all information indicating parking may improve.

However, the overall change in parking calculated by the app still shows that the (already poor) parking situation will overall get worse and Alan is likely to get to his destination faster if he parks at an alternative location and catches a metro to go a single stop. The app returns this information, giving a route to the new parking location, an estimate of the parking in the streets around this new location, and the metro route and times to get to his desired location, which show this will delay him by 5 minutes and cost £1.

An example of a use case for the third embodiment where ad-hoc event changes the parking chance, and therefore other locations are suggested:
Beth wishes to go to town and park. She enters this into her app, it shows a poor parking chance for the current time but the "Analysis and Prediction of Parking Availability system" notes that a nearby cinema film showing a popular film has a screening ending just before Beth's ETA and that many film goers will have parked in the location and will therefore leave by her ETA. Therefore, the system notes that the parking will be adequate by the time she arrives.

However, while en route the app determines from twitter that an ad-hoc event is going on near the location and many people are likely to park for this event and that the likelihood of parking in location will be poor. It also notes that some app users are both intending to and actually parking in the location and therefore others are also likely to be also doing this. It therefore finds an alternative nearby location within walking distance, indicates this to Beth, provides the route to this new location and the probability of parking in the streets around the new location and the best walking route to her desired location showing this will delay her by 2 minutes.

### (Third embodiment)

It is understood, that the actual examples of the realization of the invention described and depicted further on serve for illustrative purposes, not limiting the invention for the listed usage. Technical experts will be able to find and provide, using routine experimentation, a larger or smaller number of equivalents to the specific realizations of the invention, which are described here. Even these equivalents will be included in the following patent demands.

The geographical area where the invention may be used can be for example the area of the capital city of Prague. This geographical area comprises both the dense urban area and high density of end devices, which are operated by mobile operators' cellular telecommunication networks. Telecommunication networks operated in the area of the capital city of Prague posses a dense network of base stations, which divide the Prague's area into sectors based on the best coverage by radio signal via individual cells coverage. In the Prague's area there are operated cellular telecommunication networks falling into the 2G, 3G, 4G and newly into 5G generations.

Signalling data from several generations of cellular telecommunication networks operated by one mobile operator are used in the invention. It is also possible to use signalling data from multiple mobile operators in the invention. Signalling data are generated for all end devices, such as for example telephones (smart and standard), IoT devices, M2M, motor vehicles equipped with end devices, while dialing or receiving telephone call, while sending or receiving SMS or MMS, during active or passive use of Internet services such as web browsing, live video or audio streaming, and other IP communication. Signalling data are also generated during routine communication between the end device and telecommunication network, e.g. regular update of the end device's position initiated by the telecommunication network.

Signalling data are copied from the telecommunication networks into the invention's signalling data database **5,** where the signalling data are archived and divided based on the individual sectors operated by dominant base stations dividing the geographical area into a mosaic of sectors with the best radio coverage.

At the same time the invention is equipped with the map background database **6** with information on the coverage of individual sectors with radio signal together with information on parking slots. Thanks to the information in the map background database **6** the invention is able to determine the capacity of parking slots in the individual sectors.

The invention defines for its operation the end devices as virtual entities from the signalling data, while monitoring behavior of these virtual entities from the signalling data. Due to the fact that the geographical area where the virtual entities are present is divided into the mosaic of sectors, it is possible to determine behavior of a virtual entity, as to whether the virtual entities stay in place or move between different places, and if so, how fast they move, and whether the movement is fluent or discontinuous, etc. This behavior of virtual entities is based on the executed research in strong correlation with the prediction of probability of occurrence of vacant parking slots.

The executed research helped to identify behavioral patterns of the virtual entities dividing them into individual categories. In this invention realization the categories are: a pedestrian, a cyclist, a motor vehicle driver, a public transport passenger, a working person, others. At the same time the research helped to determine the influence of the respective categories on the probability of occurrence of vacant parking slots. The data linked to the aforementioned are stored in the virtual entities categories database **8.**

The invention is equipped with a prediction software module **7** comprising a calculation algorithm for the prediction of probability of occurrence of vacant parking slots in the given area. The algorithm input data comprises the signalling data from the signalling data database **5** including information on the number and behavior of virtual entities in the given area, further on data with map background of the given area the prediction is supposed to be conducted for, obtained from the map background database **6**, including information on the capacity of parking slots in the given area, and data with the description of the virtual entities' categories from the virtual entities categories database **8.**

The algorithm of the prediction software module **7** is implemented in the form of a running code in the invention-based **1** system working in the real time. The system **1** can be operated using own hardware, or on a virtual platform within cloud computing.

It is obvious that in the real world there will not always be free all parking slots in the given area. To make the prediction of probability of occurrence of vacant parking slots more accurate, it is necessary to have at least approximate information on the actual number of parking slots in the given area at the time the prediction of probability has been requested.

The invention makes assumptions on the initial occupancy rate of the parking slots in the individual sectors based on the archived signalling data and from the experimental measurements of the actual state. The assumptions are made for individual times, individual days or even weeks, or even longer periods of time. The completed assumptions are stored in the long-term statistics states database.

In this example of the invention realization the assumptions catalog the constituent parts of the geographical area into categories called the residential area, which is left by virtual entities before the start of working hours and then filled again with virtual entities after working hours, then the business area, which is filled by virtual entities before the start of working hours and the entities leave after working hours, then the weekend area, which is left by virtual entities before the weekend starts and filled with virtual entities when the weekend is over, there may also be the downtown area, mixed area, etc.

The accuracy of the probability prediction may be increased by sending input data from the long-term statistics states database **10** into the prediction software module algorithm **7.** Additionally virtual entities not belonging to the motor vehicle driver category due to their behavior may be filtered out from signalling data.

In newly built systems **1** it is necessary to experimentally obtain data with the actual state of vacant parking slots in the individual sectors for various day times, whose input into the system **1** will be considered as training. These experimentally obtained data with actual state are collected for approximately one month to enable the statistics software module **9** to be more precise in determining the probability while making assumptions by considering the actual capacity of parking slots in the current time as compared with the official capacity of parking slots. After completing the system **1** training period with the experimentally obtained data with the actual state of vacant parking slots, the assumptions will undergo further automatic modification in the long-term statistic states database **10**, based on the archived behavior of the virtual entities.

In case of an abrupt change in the capacity of parking slots in the given area, e.g. a new parking building gets open, new shopping mall, street reconstruction, etc., it is necessary to conduct again the system **1** training process to update the assumptions in the long-term statistics state database **10** in order to enable the system to immediately reflect the changes while making predictions. In case the training process is not realized, the predictions will be adjusted automatically after a sufficient amount of archived signalling data reflecting the new state in the given area has been collected.

Another feature influencing the prediction is the feedback from the motor vehicle drivers' **4** user devices. The users' devices **4** have their own data storages **12** with the feedback software module **13**, through which they send data with the information on how the prediction was successful back to the system **1.** The participation of the users in providing feedback is active, but it is not required by the invention.

The invention-based system **1** may be equipped with a supplementary database **14**, with data on weather, important days and national holidays, data on street closures and prohibited parking due to street cleaning, etc. Data from the supplementary database **14** are used during calculation of the prediction.

The additional information may include information on sport events, cultural events, social events. Data may be entered into the system **1** manually, or collected automatically from social networks, such as Facebook, Twitter, etc., using the social software module **15**, which monitors these social networks permanently.

The last extension of the system **1** is the users' points of interest database **16**, which includes information on the occurrence of points of interest in the given area the user requests prediction for. The user obtains not only information on the probability of occurrence of vacant parking slots, but he/she also obtains information that if he/she parks in the given area at a given place, he/she may visit a preferred point of interest. For example, if the user likes a certain automobile brand, the system **1** offers him/her probable parking places, while at one of the proposed localities the system will suggest the user has parked just next to his favorite car brand store, which may influence the user's intentions.

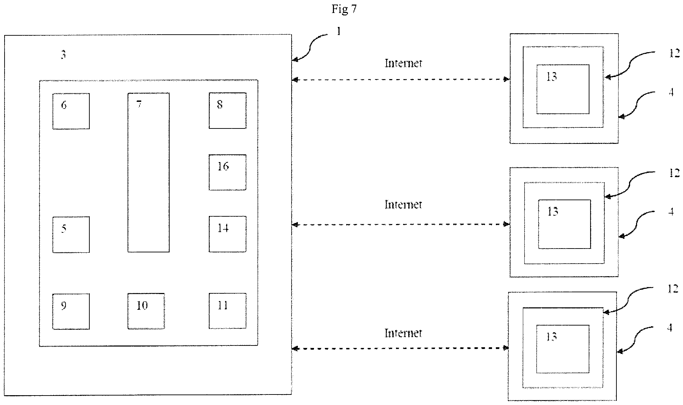

FIG. 7 shows a block diagram of fully equipped system **1**. Users' devices **4** communicate with the server **2** through the Internet. The server **2** has a data storage **3**, where the virtual components of the system **1,** such as software modules and databases are stored in.

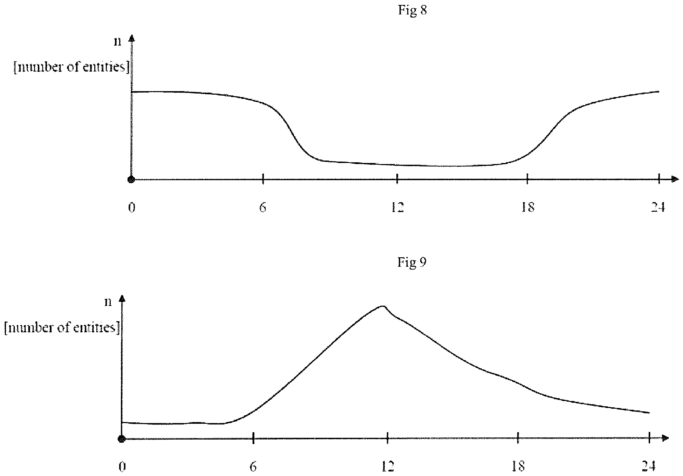

FIG. 8 shows the change in the number of virtual entities during the day in the given area which belongs into the residential area category. The number of virtual entities during standard working hours is lower. For the sake of comparison FIG. 9 shows the change in the number of virtual entities during the day in the given area, which belongs into the business area category. Where the trend is reversed and during standard working hours the number of virtual entities gets higher.

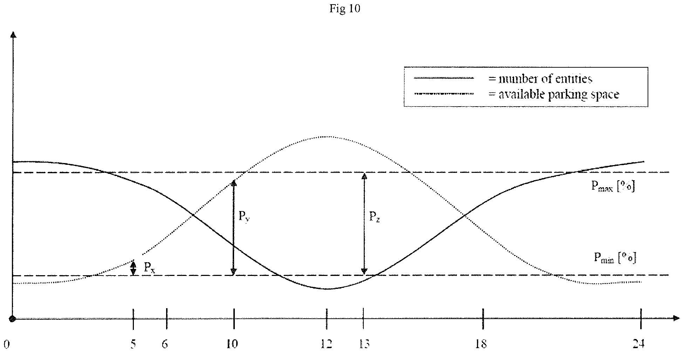

FIG. 10 shows the correlation between the number of entities present in the residential area and the number of actually available parking slots. Also the maximum and minimum limits of the probability of occurrence of vacant parking slots are set. The probability **P_{X}** at 5 AM is at low probability limit, where the parking slots in the given area are not expected to be vacant. Virtual entities are still in their homes and their motor vehicles are parked in the area. The probability **P_{Y}** of occurrence of vacant parking slots at 10 AM will be close to the maximum probability limit since the virtual entities have already left the area. The probability **PZ** has reached its maximum and it is certain it will be possible to park in the given area, because at this time the number of virtual entities in the area is at the lowest.

FIG. 10 illustrates the above mentioned assumption. The current number of virtual entities in the given area will be compared with the assumption based on the statistically processed signalling data, which consequently changes the extent of the probability limits making the prediction more accurate.

### Model situation:

The user sends a request at 2 PM on Monday for the prediction of probability of occurrence of vacant parking slots for the Cukrovarnická street area. Signalling data shows that at a given time there is a certain number of virtual entities in the given area, which do affect the occupancy rate of parking slots, then the system would calculate a high-percentage probability of occurrence of parking slots, which the system would mark with green color on the user device **4,** symbolizing trouble-free parking, then the prediction software module **7** uses the assumption for the given area, day and time, and adjusts the calculated percentage probability to a medium chance, symbolized with yellow color, due to the fact, that some entities have left their cars in the area based on the statistical processing of archived data.

In a similar situation the system sends a message to the user, that in the respective street there is street cleaning in progress, so parking there is not possible, but in the neighboring Hru 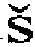 ková street the probability of occurrence of vacant parking slots is marked with yellow color, in another neighboring street the probability is symbolized with red color meaning parking is very complicated there, whereas in a street about 500 m from the Hru 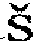 ková street the probability of parking is symbolized with green color on the user's device **4,** while in the street there is also a Traditional Chinese Medicine food supplements store.

Similarly in a different model situation, when the user is coming back to his/her hometown, he/she is notified by the system **1** by sending the probability, that he/she may not be able to park in his/her street at the given time due to an ongoing protest which the user receives information about, while the user is recommended to park for the time of the rally in a local paid parking lot.

The symbolization displaying the calculated probability percentage is completely optional, in this version of the invention, the green color symbolizes the probability of 100 % - 76 %, the yellow color symbolizes the probability of 75 % - 51 %, and the red color symbolizes 50 % - 0 % probability. Other symbolization in other versions of the invention is an outcome of the routine effort.

### Reference symbols overview

1 system
2 server
3 data storage device
4 user device
5 signalling data database
6 map background database
7 prediction software module
8 virtual entities category database
9 statistics software module
10 long-term statistics states database
11 training database
12 user device data storage
13 feedback software module
14 supplementary database
15 special software module
16 users' points of interest database

## Claims

1. A system for providing one or more travel routes according to one or more user
objectives, the system comprising:
a user objective determination algorithm to receive user information from a user interface and to determine one or more user objectives;
a user objective database to store the one or more user objectives;
an entity database to store a plurality of entity records;
a parking database to store a plurality of parking locations records;
a routing database to store a plurality of travel routes;
a parking location recommendation algorithm to recommend one or more parking locations from the parking database according to the one or more user objectives;
wherein the routing database comprises a routing algorithm for generating a plurality of travel routes to the one or more recommended parking locations.

2. The system according to claim 1, wherein each entity record comprises an entity name, an entity category and entity location information.

3. The system according to claim 1 or 2, wherein the travel routes comprise a plurality of vehicle travel routes and a plurality of pedestrian walking paths obtained from one or more geographical navigation applications.

4. The system according to any one of claims 1 to 3, wherein the user objective comprises a destination and one or more desired entities and/or one or more undesired entities.

5. The system according to any one of claims 1 to 4, wherein the routing algorithm is configured to generate additional travel routes to the one or more recommended parking locations that include the locations of the one or more desired entities and/or to avoid the locations of the one or more undesired entities.

6. A vehicle for use with a system according to claim 1, the vehicle comprising:
a user interface to receive one or more user objectives and to display a route selection list that meets the one or more user objectives.

7. A method for providing one or more vehicle travel routes according to one or more user objectives, the method comprising:
a user information collection process for receiving user information via a user interface and determining one or more user objectives, the user objectives comprise a destination and one or more desired entities and/or one or more undesired entities;
a parking location recommendation process for recommending one or more parking locations from a parking database according to the one or more user objectives;
generating, via a routing algorithm, a plurality of travel routes to the one or more recommended parking locations.

8. The method according to claim 7, further comprising an entity collection process for
gathering data on entities from online resources, entities owners, and/or users, and storing
the entities as entity records in an entity database,
wherein each record entity comprises an entity name, an entity category and entity location information.

9. The method according to claim 7 or 8, the user information collection process further comprising:
parsing, via a user objective determination algorithm, the user information received from the user interface to determine the one or more user objectives.

10. The method according to any one of claims 7 to 9, the parking location recommendation process further comprising the steps of:
querying a routing database, via a parking location recommendation algorithm, to find the one or more parking locations in close proximity to the destination;
querying the routing database, via the parking location recommendation algorithm, to find a plurality of travel routes from a current location to each parking location found;
querying the routing database, via the parking location recommendation algorithm, for the locations of the one or more desired entities and/or one or more undesired entities;
querying the routing database, via the parking location recommendation algorithm, for additional travel routes to include the locations of the one or more desired entities and/or to avoid the locations of the one or more undesired entities;
compiling the travel routes into a route selection list;
presenting, via the user interface, the route selection list to the user.

11. The method according to claim 10, further comprising:
obtaining a plurality of vehicle travel routes and a plurality of pedestrian walking paths from one or more geographical navigation applications, and
storing the plurality of vehicle travel routes and the plurality of pedestrian walking paths as travel routes in the routing database.

12. The method according to claim 10 or 11, further comprising
generating, via a routing algorithm, the additional travel routes to the destination which include the locations of the one or more desired entities and/or to avoid the locations of the one or more undesired entities.

13. The method according to claim 7, further comprising storing the one or more user objectives in a user objective database.

14. The method according to any one of claims 7 to 13, further comprising
storing a plurality of parking locations records in a parking database.
